# EUROPEAN PATENT SPECIFICATION

(11) **EP 2 161 988 B1**
(45) Date of publication and mention of the grant of the patent: **07.11.2018**
(21) Application number: 08789992.8
(22) Date of filing: 18.06.2008
(51) Int. Cl.: A01K 27/00

(54) **COLLAR FOR PETS, EQUIPPED WITH ADJUSTABLE FASTENING AND FIXING MEANS**
MIT EINSTELLBAREN ANBINDUNGS- ODER BEFESTIGUNGSMITTELN AUSGESTATTETES HALSBAND FÜR HAUSTIERE
COLLIER À MOYENS D'ATTACHE ET FIXATION RÉGLABLES POUR ANIMAUX DOMESTIQUES

(30) Priority: 21.06.2007 IT VR20070088
(43) Date of publication of application: 17.03.2010
(73) Proprietor: FERPLAST SPA, 36070 Castelgomberto (IT)
(72) Inventor: VACCARI, Carlo, 36070 Castelgomberto (IT)
(74) Representative: Sandri, Sandro
(86) International application number: PCT/IT2008/000403
(87) International publication number: WO 2008/155791

(56) References cited:
- FR-A- 2 841 739
- US-A- 424 197
- US-B1- 6 694 923
- US-B1- 6 715 449

## Description

### TECHNICAL FIELD

This invention refers to a collar for pets, mainly for dogs but also for other animals, which is constructed with technology that makes it possible to fit it very quickly and simply and at the same time allowing particular adjustment elements to be operated in order to alter the size as required.

More specifically, this invention refers to a collar which differs from common collars in that it is made using a completely innovative blocking system since the closing method can be adjusted as required, avoiding the need to remove the collar from the animal in order to adjust it.

The collar according to the invention focuses on the method of closing and blocking/opening and blocking, as well as on the adjustment of the collar around the animal's neck and on the mechanisms used for this purpose.

This invention can be applied in the sector of accessories for pets, in particular in the sector of accessories such as collars, harnesses and leads for pets such as, for example, dogs, cats or the like.

### BACKGROUND ART

It is known that pets that need to be walked are usually accompanied using leads provided with a grip to be held by the person walking the pet, and a coupling element which is generally the spring clip type for attaching the lead to a collar or harness.

It is also known that traditional collars comprise a strap with ends that can be joined by any suitable means to form a circle designed to be wrapped around the neck or a part of the body of a pet.

The collar also comprises a ring so that it can be attached to a spring clip that can be fixed to the cord of a lead so that the person walking the pet can always keep the animal under complete and secure control when walking.

The coupling means for the ends of the collar can consist of a buckle, a clip type fastening or even a bayonet type fastening, in any case such as to ensure safety against any abrupt movements of the pet, above all if the animal is large. The same applies to harnesses.

One drawback encountered with traditional collars is represented by the fact that there are no models that cover all sizes of animals from when the animal is young to when it is an adult, without being completely or at least partially replaced.

Another drawback concerns the fact that all the collars on the market have to be taken off the animal before they can be adjusted.

Most products also require the use of both hands in order to remove them from the animal.

Yet another problem with traditional collars concerns the fact since they have to adapt well to the animal without being too tight or too loose, they must be made in different sizes according to the size of the animal itself.

An additional problem is that the purchaser often buys the collar without first testing it on the animal and at times finds that it does not match with the size of the animal.

Yet again, from an industrial point of view, the fact of being obliged to have various sizes of collars is not economically advantageous, as this requires different production lines and more storage space for stocks, having to produce numerous series of collars in different lengths according to the size of the animal on which the collar will be fitted.

Document US-B1-6715449 discloses an adjustable animal collar comprising a strap with a housing at one end and a second end connected to an engagement area. The engagement area is forme with a plurality of teeth received into the housing, where a rotating pawl engages the teeth. The pawl, pivotably rotating within the housing and partly covered with a cover plate, has a torsion spring to bias tha pawl in favor of engagemente with at least one of the teeth.

Document FR-A-2841739 discloses a collar for pet comprising a ring and a toothed tape. The ring is fixed at one end of the collar and is provided with an articulated tongue. Th toothed tape is fixed at the other end of the collar and is provided with a given number of inclined teeth. In operation, the articulated tongue is releasably engaged with a tooth of the toothed tape.

US patent No. 424197 discloses a collar made of sheet metal and composed of two sections which are adjustable on each other by means of a series of holes co-operating with corresponding spring-actuated pins.

### DESCRIPTION OF THE INVENTION

This invention proposes to provide an adjustable collar for pets that can eliminate or significantly reduce the drawbacks described above.

This invention also proposes to provide a collar that can be easily fitted on pets of any size and adjusted without having to remove it from the animal's neck.

An additional aim of this invention is to provide an adjustable collar for pets that is easy to produce and thus with a limited production cost in order to be advantageous from a financial point of view.

This is achieved by means of an adjustable collar with the features described in claim 1.

The dependent claims describe advantageous embodiments of the collar according to the invention.

The adjustable collar for pets according to the invention therefore substantially consists of an upper strap fitted with a half-ring for attachment to a lead and with one of the two pairs of mechanisms such as spring pushbuttons or levers, and of a neck-band which is padded, and fitted with the second pair of toothed tape type mechanisms .

### DESCRIPTION OF THE DRAWINGS

Other features and advantages of the invention will become evident on reading the following description of one embodiment of the invention, given as a non-binding example, together with the accompanying drawings in which:

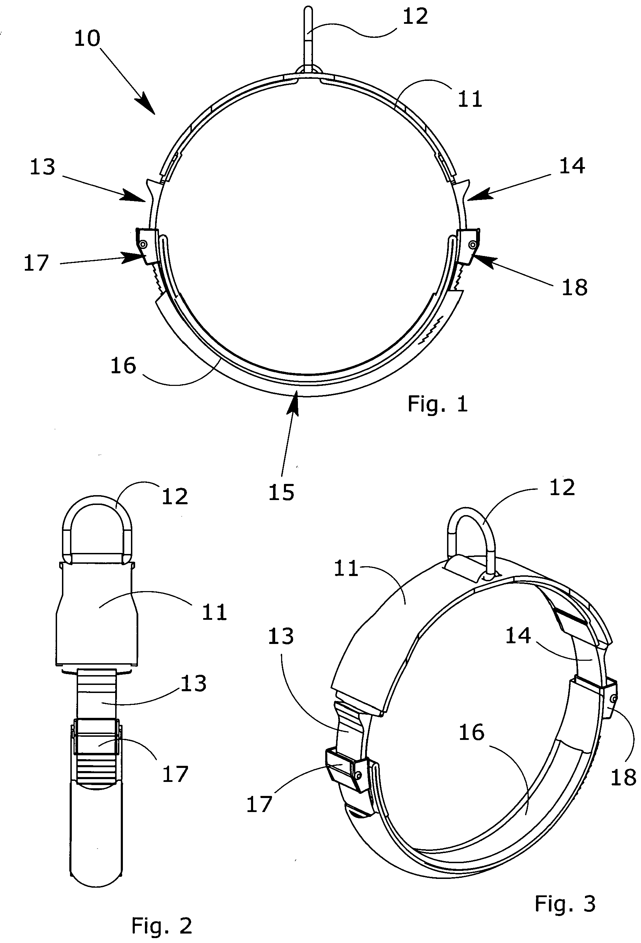

- figure 1 represents a schematic view of a collar according to the invention seen from the front;
- figure 2 is a schematic view of the collar according to the invention seen from the side;
- figure 3 shows the collar in axonometric prospective;

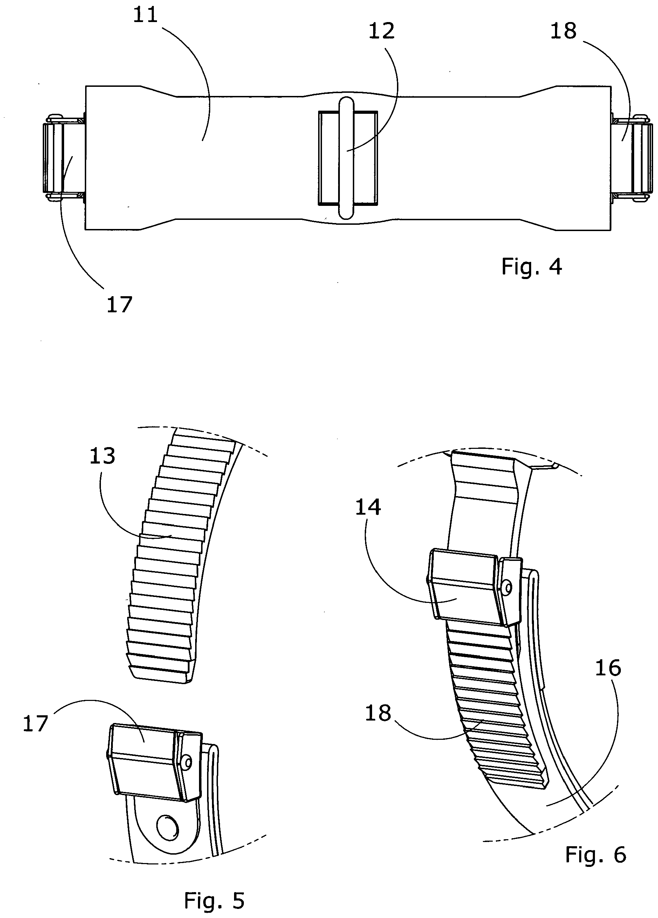

- figure 4 is a schematic view of the collar according to the invention seen from above;
- figures 5 and 6 show schematic views of the toothed tab type coupling system closed by a spring hook or lever;
- figures 7 to 10 show schematic views of a non-claimed
harness, seen respectively from the front, the side, above and in axonometric prospective.

### DESCRIPTION OF ONE EMBODIMENT OF THE INVENTION

With reference to the accompanying drawings, the reference number 10 indicates a collar in general, in the case in question an adjustable collar comprising single or double components according to more or less adjustment possibilities.

Although the collar can be made with single components, we will describe one with double components, for the sake of completeness, and according to the claimed invention it consists of a first, substantially semi-circular, upper strap 11 fitted with a half-ring 12 for attachment to a lead and with one of the two pairs of mechanisms 13 and 14, and a second, substantially semi-circular, lower strap 15, with padding 16, fitted with a second pair of mechanisms 17 and 18.

The first of the two pairs of mechanisms, those indicated with 13 and 14, consists of toothed tapes or tabs, while the second pair of mechanisms 17 and 18 consists of spring pushbuttons or levers.

The upper strap 11 is attached to the lower padded strap 15 simply by inserting the toothed tabs 13 and 14 in the spring pushbuttons or levers 17 and 18.

The two coupling sectors are more or less symmetrical with respect to the center line of the collar, even though this condition is not strictly necessary since the mechanical function is not altered if the parts are arranged asymmetrically.

In addition, the toothed tabs or tapes can be fitted either on the first semicircular strap 11 or on the second strap 15, and vice versa for the pushbuttons: functioning is in any case guaranteed.

To fasten the collar around the animal's neck, it is sufficient to insert the toothed tab 13 and 14 in the spring pushbuttons or levers 17 and 18 as far as the required position: the mechanism is automatically blocked and the collar cannot be loosened without pressing the relative pushbutton.

As regards the release method, it is sufficient to insert the index finger between the collar and the animal's neck and use the thumb to press the respective pushbutton or lever 17 and 18, or to apply pressure with two fingers, one against the other, to release the tab and pull in the release direction.

According to another embodiment, the collar can also be provided with pockets to contain the tabs or tapes.

These pockets have an aesthetic function and also protect the tape and the animal, as they prevent the collar or one of its protruding parts from accidentally catching on obstacles such as branches, fences or the like.

According to yet another embodiment, the collar can also be provided with elements that protect or block the pushbutton/s (or lever) that prevent any accidental opening.

As can be noted, and as already mentioned, this collar can be adjusted while it is being worn by the animal, and the mechanism allows the collar to be removed using just one hand: it is sufficient to press the release button and pull to achieve complete opening.

The collar according to the invention also allows replacement of just the second strap, containing the padding, so as to cover various sizes, from "small" to "extralarge", without having to replace the item completely when the animal grows a size larger.

Finally, it should be noted that the presence of two pairs of mechanisms also allows double adjustment of the lower strap thus ensuring centering of the padding on the front part of the animal's neck: this is in fact the area must subject to traction during use of the collar attached to a lead.

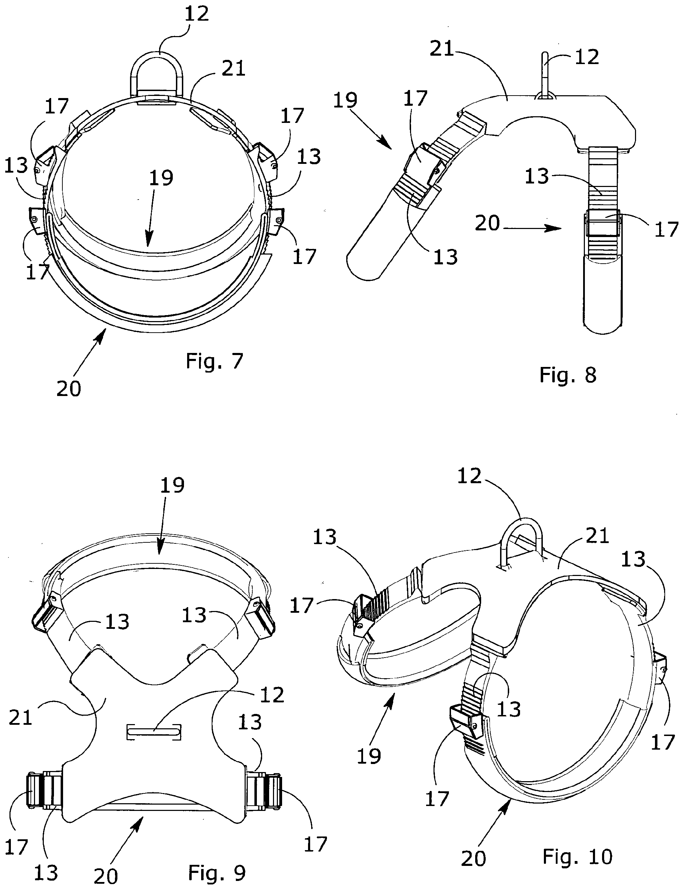

Figures 7 to 10 show a similar non-claimed harness-type solution, and in this case the coupling points are doubled since the harness can be fastened either in the collar or neck-band area, or in the chest or under-belly area.

According to this solution, the two straps 19 and 20 are fixed to an upper strap 21 (on which the half-ring 12 is fitted) at the four coupling points and each of these is fitted with at least a first toothed tab mechanism 13 and at least a second spring pushbutton or lever mechanism 17.

There can thus be either one or more coupling points for each neck or under-belly strap .

## Claims

1. An adjustable collar (10) for pets to be placed around the neck of a pet, said collar (10) comprising a ring (12) or similar designed to be attached to a spring clip of a lead, said collar (10) being constituted by a first, semi-circular, upper strap (11) and by a second lower strap (15), whereby the ends of said first upper strap (11) and of said second lower strap (15) are provided with reciprocal coupling means (13, 14; 17, 18) allowing said first upper strap (11) to be releasably attached to said second lower strap (15), **characterised in that** the means for coupling the ends of the upper strap (11) with the ends of the lower strap (15) consist of a pair of toothed tabs or tapes (13, 14) designed to couple with a pair of spring-pushbuttons or levers (17, 18) which grip the teeth of the toothed tabs or tapes (13, 14), thereby allowing said collar (10) to be either blocked around the neck of a pet, or released from said neck, as well as to adjust the collar to be fitted on pets of any size, **in that** said ring (12) is fitted on said upper strap (11) and **in that** said lower strap comprises a padding (16).

2. An adjustable collar (10) according to claim 1, **characterised in that** it is provided with pockets to contain the tabs or tapes (13, 14).

3. An adjustable collar (10) according to any one of the preceding claims, **characterised in that** it is provided with elements that protect or block the pushbutton/s or lever/s preventing any accidental opening of said pushbuttons or levers (17, 18).

## Patentansprüche

1. Verstellbares Halsband (10) für Haustiere, das um den Hals eines Haustieres gelegt wird, das Halsband (10) umfassend
einen Ring (12) oder dergleichen, der dazu bestimmt ist, an einer Federklemme einer Leine befestigt zu werden, wobei das Halsband (10) aus einem ersten, halbkreisförmigen, oberen Gurt (11) und einem zweiten unteren Gurt (15) besteht, wobei die Enden des ersten oberen Gurtes (11) und des zweiten unteren Gurtes (15) mit gegenseitigen Verbindungsvorrichtungen (13, 14) versehen sind; 17, 18), so dass der erste obere Gurt (11) lösbar an dem zweiten unteren Gurt (15) befestigt werden kann, **dadurch gekennzeichnet, dass** die Vorrichtung zum Verbinden der Enden des oberen Gurtes (11) mit den Enden des unteren Gurtes (15) aus einem Paar gezahnter Laschen oder Bänder (13, 14) bestehen, die zum Verbinden mit einem Paar von Federdrucktasten oder Hebeln (17) ausgebildet sind, 18) die in die Zähne der gezahnten Laschen oder Bänder (13, 14) greifen, wodurch ermöglicht wird, dass das Halsband (10) entweder um den Hals eines Haustieres fest angebracht oder von diesem gelöst wird, sowie das Halsband, das an Haustieren jeder Größe angebracht werden soll, einzustellen, dass der Ring (12) an dem oberen Gurt (11) angebracht ist und dass der untere Gurt eine Polsterung (16) umfasst.

2. Verstellbares Halsband (10) nach Anspruch 1, **dadurch gekennzeichnet, dass** es mit Taschen versehen ist, um die Laschen oder Bänder (13, 14) aufzunehmen.

3. Verstellbares Halsband (10) nach einem der vorhergehenden Ansprüche, **dadurch gekennzeichnet, dass** es mit Elementen versehen ist, die die Drucktaste(n) oder den Hebel(n) schützen oder blockieren und ein versehentliches Öffnen der Drucktasten oder Hebel (17, 18) verhindern.

## Revendications

1. Collier réglable (10) pour animaux de compagnie à placer autour du cou d'un animal de compagnie, ledit collier (10) comprenant un anneau (12) ou équivalent conçu pour être attaché à une attache à ressort d'une laisse, ledit collier (10) étant constitué d'une première bride supérieure semi-circulaire (11) et d'une seconde bride inférieure (15), dans lequel les extrémités de ladite première bride supérieure (11) et de ladite seconde bride inférieure (15) sont pourvues de moyens de couplage mutuel (13, 14 ; 17, 18) permettant à ladite première bride supérieure (11) d'être attachée de façon détachable à ladite seconde bride inférieure (15), **caractérisé en ce que** les moyens de couplage des extrémités de la bride supérieure (11) avec les extrémités de la bride inférieure (15) consistent en une paire de pattes ou bandes dentées (13, 14) destinées à se coupler avec une paire de leviers ou boutons-poussoirs à ressort (17, 18) qui se mettent en prise avec les dents des pattes ou bandes dentées (13, 14), permettant ainsi audit collier (10) d'être soit bloqué autour du cou d'un animal de compagnie, soit détaché dudit cou, ainsi que d'ajuster le collier à installer sur des animaux de compagnie de toute taille, **en ce que** ledit anneau (12) est installé sur ladite bride supérieure (11) et **en ce que** ladite bride inférieure comprend un rembourrage (16).

2. Collier réglable (10) selon la revendication 1, **caractérisé en ce qu'**il est pourvu de poches pour contenir les pattes ou bandes (13, 14).

3. Collier réglable (10) selon l'une quelconque des revendications précédentes, **caractérisé en ce qu'**il est pourvu d'éléments protégeant ou bloquant le(s) bouton(s) poussoir(s) ou levier(s), empêchant toute ouverture accidentelle desdits boutons poussoirs ou leviers (17, 18).
